# EUROPÄISCHE PATENTANMELDUNG

(11) **EP 0 900 770 A1**
(43) Veröffentlichungstag der Anmeldung: **10.03.1999**
(21) Anmeldenummer: 98402049.5
(22) Anmeldetag: 13.08.1998
(51) Int. Cl.: C03C 25/02

(54) **Verfahren zur Beschichtung einer optischen Faser**

(30) Priorität: 04.09.1997 DE 19738687
(71) Anmelder: ALCATEL, 75008 Paris (FR)
(72) Erfinder: Lysson, Hans-Jürgen, 41352 Korschenbroich (DE); Dieumegard, Anne, 59263 Houplin Ancoisne (FR); Mairesse, Arnaud, 59000 Lille (FR)
(74) Vertreter: Mende, Eberhard, Dipl.-Ing.

(57) **Zusammenfassung**

Vorgeschlagen wird ein Verfahren zur Beschichtung einer optischen Faser (1), die in Längsrichtung aus einem Volumen (11), das mit einem flüssigen, aushärtbaren Beschichtungsmaterial (6) gefüllt ist, durch eine Beschichtungsdüse (10) austritt, wobei die Faseroberfläche von der Wandung (12) der Beschichtungsdüse (10) beabstandet ist, wobei die Viskosität des Beschichtungsmaterials (6) bei Raumtemperatur größer als 2.500 mPa·s ist und die Temperatur des Beschichtungsmaterials (6) so hoch eingestellt wird, daß seine Viskosität kleiner als 2.000 mPa·s ist.

## Beschreibung

Die Erfindung bezieht sich auf ein Verfahren gemäß dem Oberbegriff des Anspruchs 1.

Im Stande der Technik werden optische Fasern, insbesondere Glasfasern, zum Schutz vor mechanischer Beschädigung und Verschmutzung, zur Verbesserung der Handhabbarkeit und ggf. um eine farbliche Unterscheidung zu ermöglichen mit einer Oberflächenbeschichtung versehen. Bei einem dazu geeigneten Verfahren, das in der Druckschrift EP 509 487 A2 beschrieben ist, wird die Faser zunächst auf bekannte Weise in einem Ofen aus einer Vorform gezogen. Nach hinreichender Abkühlung verläuft sie in Längsrichtung durch eine Beschichtungseinheit, in der kontinuierlich ein flüssiges, aushärtbares Beschichtungsmaterial auf ihre Oberfläche aufgebracht wird. Seine Viskosität beträgt bei Raumtemperatur (25 °C) zwischen 2000 und 6000 mPa·s. Die Verarbeitung handelsüblicher Beschichtungsmaterialien erfolgt zur Gewährleistung einer guten Handhabbarkeit in der Regel bei Temperaturen von 25 bis 45 °C, wobei ihre Viskosität etwa 2.500 bis 5.000 mPa·s beträgt.

In einer Beschichtungseinheit, die in der Patentanmeldung EP 619 275 A2 dargestellt ist, befindet sich das Beschichtungsmaterial unter Druckbeaufschlagung in einem Volumen, in das die Faser durch eine Führungsdüse eintritt. Der Austritt der Faser aus dem Beschichtungsmaterial erfolgt durch eine Beschichtungsdüse, deren Wandungen von der Faseroberfläche beabstandet sind. Dabei zieht die Faser das aufgrund von Oberflächenadhäsion anhaftende Beschichtungsmaterial durch die Beschichtungsdüse aus der Beschichtungseinheit heraus und wird auf diese Weise mit einem flüssigen Film überzogen. In einer nachfolgenden Härteeinheit erfolgt die Aushärtung des Materials, vorzugsweise durch ultraviolette Bestrahlung. Gebräuchlich sind zu diesem Zweck Kunststoffe, insbesondere UV-härtbare Harze mit Polymeren, die Urethangruppen enthalten.

Glasfasern werden auf diese Weise meist in gleichartigen, aufeinander folgendenden Beschichtungs- und Härteeinheiten mit zwei- oder mehrlagigen Beschichtungen versehen. Bevorzugt ist eine vergleichsweise weiche Primärbeschichtung und eine härtere Sekundärbeschichtung zum mechanischen Schutz. Um die farbliche Unterscheidung verschiedener Fasern zu ermöglichen, kann die Sekundärbeschichtung Pigmente enthalten oder in einem weiteren Arbeitsgang eine äußere Farbbeschichtung aufgebracht weden. Auch die Einfärbung der Fasern erfolgt zunehmend mit UV-härtbaren Materialien, da lösungsmittelhaltige Farbstoffe umweltbelastend sind und bei hoher Bewegungsgeschwindigkeit der Faser eine vergleichsweise lange Wegstrecke zum Trocknen benötigen.

Speziell bei Fasergeschwindigkeiten im Bereich ab 1.000 m/min erweist sich die Qualität der aufgebrachten Beschichtungen oft als unzureichend. Insbesondere ist die Verteilung des Beschichtungsmaterials bezüglich der Faserachse vielfach asymmetrisch, d.h. die Faser ist exzentrisch im umgebenden Material angeordnet. Dieses Problem besteht auch bei UV-härtbaren Farben, die prozeßbedingt eine Mindestdicke des Beschichtungsfilms von einigen Mikrometern erfordern. Weiterhin reißt der flüssige Beschichtungsfilm bei Geschwindigkeiten oberhalb von 1.000 m/min häufig von der Faseroberfläche ab, so daß die Faser unbrauchbar wird.

Vor diesem Hintergrund hat es sich die Erfindung zur Aufgabe gestellt, ein Beschichtungsverfahren zu entwickeln, bei dem die Faser unter Vermeidung eines hohen Aufwandes zur Umrüstung der Beschichtungsvorrichtung zentrisch in das Beschichtungsmaterial eingebettet wird und die Gefahr eines Abreißens des Beschichtungsmaterials von der Faseroberfläche reduziert ist.

Diese Aufgabe wird erfindungsgemäß durch die kennzeichnenden Merkmale des Anspruchs 1 gelöst.

Der Grundgedanke der Erfindung besteht darin, ein Beschichtungsmaterial zu verwenden, dessen Viskosität im flüssigen Zustand niedrig ist. Zweckmäßig beträgt sie zwischen 1.000 und 1.500 mPa·s. Auf diese Weise wird einerseits das Verlaufen des Beschichtungsmaterials zu einem Film gleichmäßiger Dicke erleichtert, so daß die konzentrische Einbettung der Faser erheblich verbessert ist. Andererseits werden die Scherkräfte innerhalb des flüssigen Beschichtungsmaterials im Bereich der Beschichtungsdüse verringert. Daher ist die Adhäsion des Beschichtungsmaterials an der Faseroberfläche ausreichend, um auch bei Geschwindigkeiten der Faser oberhalb von 1.000 m/min ein Abreißen des Beschichtungsfilms zu verhindern. Das Beschichtungsmaterial kann eine beliebige Beschichtung auf der Faser bilden, insbesondere die Primärbeschichtung, die Sekundärbeschichtung oder eine Signierfarbe.

Um handelsübliche Beschichtungsmaterialien verwenden zu können, wird vorgeschlagen, die Viskosität des Beschichtungsmaterials durch eine hinreichende Temperatur im Volumen der Beschichtungseinheit und insbesondere in der Beschichtungsdüse einzustellen. Gegenüber dem Stande der Technik wird die Verarbeitungstemperatur des Beschichtungsmaterials vorzugsweise um etwa 10 °C erhöht. Vorteilhaft ist eine Erhöhung der Temperatur für die primäre Beschichtung von 45 °C auf 55 °C (entsprechend einer Viskositätsabnahme von 2.300 mPa·s auf 1.200 mPa·s) und der Temperatur zum Aufbringen der sekundären Beschichtung von 26 °C (Viskosität 4.700 mPa·s) auf 38 °C (1.200 mPa·s). Die Bewegungsgeschwindigkeit der Faser beträgt im Dauerbetrieb bevorzugt zumindest 1.000 m/min.

Zur Erreichung unveränderter Beschichtungsdicken trotz verringerter Viskosität ist es erforderlich, den Querschnitt der jeweiligen Beschichtungsdüse gegenüber dem Stand der Technik zu vergrößern. Bei einem Faserdurchmesser von 125 µm ergibt sich ein unveränderter, der gebräuchlichen Spezifikation entsprechender Außendurchmesser der Primärbeschichtung von etwa 180-200 µm, wenn der Durchmesser der primären Beschichtungsdüse um etwa 3 µm von 224 µm auf 227 µm erhöht wird. Für eine Sekundärbeschichtung mit einem Außendurchmesser von 245 ± 10 µm ist hierbei die Vergrößerung des Durchmessers der sekundären Beschichtungsdüse um etwa 5 µm von 325 µm auf etwa 330 µm notwendig. Weiterhin ist aufgrund der niedrigen Viskosität eine vergleichsweise geringe Druckbeaufschlagung des Beschichtungsmaterials im Volumen der Beschichtungseinheit einstellbar. Als zweckmäßig erweist sich eine Druckabsenkung gegenüber dem Stande der Technik um etwa 30 bis 70 %, so daß die Druckbeaufschlagung bei einer Viskosität von 1.200 mPa·s sowohl im Fall der Primärbeschichtung als auch der Sekundärbeschichtung 400 - 1.000 hPa, vorzugsweise 600 hPa beträgt.

In einer vorteilhaften Ausgestaltung des Verfahrens wird das Beschichtungsmaterial durch ultraviolette Strahlung ausgehärtet. Auf diese Weise lassen sich lösungsmittelfreie Beschichtungsmaterialien verwenden, insbesondere lösungsmittelfreie Signierfarben, so daß Umweltbelastungen durch das Lösungsmittel vermieden werden. Zudem läßt sich das Beschichtungsmaterial auch bei hohen Geschwindigkeiten der Faser auf einer vergleichsweise kurzen Bewegungsstrecke aushärten.

Bevorzugt entspricht die Temperatur des Beschichtungsmaterials zumindest näherungsweise der Fasertemperatur, um eine qualitativ hochwertige Beschichtung zu erzeugen.

Im Fall der primären Beschichtung der Faser wird vorgeschlagen, daß die Temperatur des Beschichtungsmaterials näherungsweise die Maximaltemperatur ist, bei der es chemisch stabil ist. Ein geringer Abstand von etwa 5 °C zur Maximaltemperatur ist jedoch zweckmäßig, um die Prozeßführung zu vereinfachen. Da gebräuchliche Beschichtungsmaterialien bis etwa 60 °C chemisch stabil sind, bieten sich somit Beschichtungsemperaturen im Bereich von 55 °C an. Die erhöhte Prozeßtemperatur hat zur Folge, daß sich der Aufwand zur Kühlung der Faser vor der Beschichtungseinheit reduziert.

Weiterhin ist es denkbar, die Temperatur des Beschichtungsmaterials und/oder der Faser durch einen Regelkreis einzustellen. Regelgröße ist die Beschichtungsdicke, die sich mit einem der Beschichtungsdüse oder der Härteeinheit in Bewegungsrichtung der Faser nachgeordneten Sensor erfassen läßt. Das Stellglied des Regelkreises ist zweckmäßig eine Heiz- oder Kühleinheit, mit der die Temperatur der Faser und/oder der Beschichtungseinheit und/oder des Beschichtungsmaterials einstellbar ist. Die Temperaturänderung hat eine Viskositätsänderung des Beschichtungsmaterials zur Folge, die wiederum eine Dickenänderung der Beschichtung bewirkt. Somit läßt sich die Beschichtungsdicke mit dem Regelkreis auf einen Sollwert einstellen.

Anhand der schematischen Zeichnung wird im nachfolgenden Beschreibungsteil ein Ausführungsbeispiel der Erfindung näher erläutert. Es zeigt
Figur 1: Aufbau einer Vorrichtung zur Durchführung des erfindungsgemäßen Verfahrens,
Figur 2: Querschnitt durch eine Beschichtungsdüse mit durchlaufender Faser.

Bei dem erfindungsgemäßen Verfahren wird eine Faser (1) in einem Ziehofen (2) aus einer Vorform (3) gezogen und verläuft nachfolgend durch eine Kühleinheit (4) und eine Beschichtungseinheit (5), in der ein flüssiges Beschichtungsmaterial (6) aufgebracht wird. Der Beschichtungseinheit (5) ist eine Ultraviolett-Lichtquelle (7) nachgeordnet, mit der das aufgebrachte Beschichtungsmaterial (6) aushärtbar ist. Eine Meßeinheit (8) dient zur Erfassung der Schichtdicke des Beschichtungsmaterials (6). In Abhängigkeit vom Meßwert regelt eine Steuerung (9) die Betriebsparameter der Beschichtungseinheit (5) und ggf. der Kühleinheit (4). Meist verläuft die Faser (1) im Anschluß an die Meßeinheit (8) durch weitere, gleichartige Beschichtungseinheiten zur Aufbringung einer oder mehrerer sekundärer Beschichtungen und einer ultraviolett-härtbaren Signierfarbe.

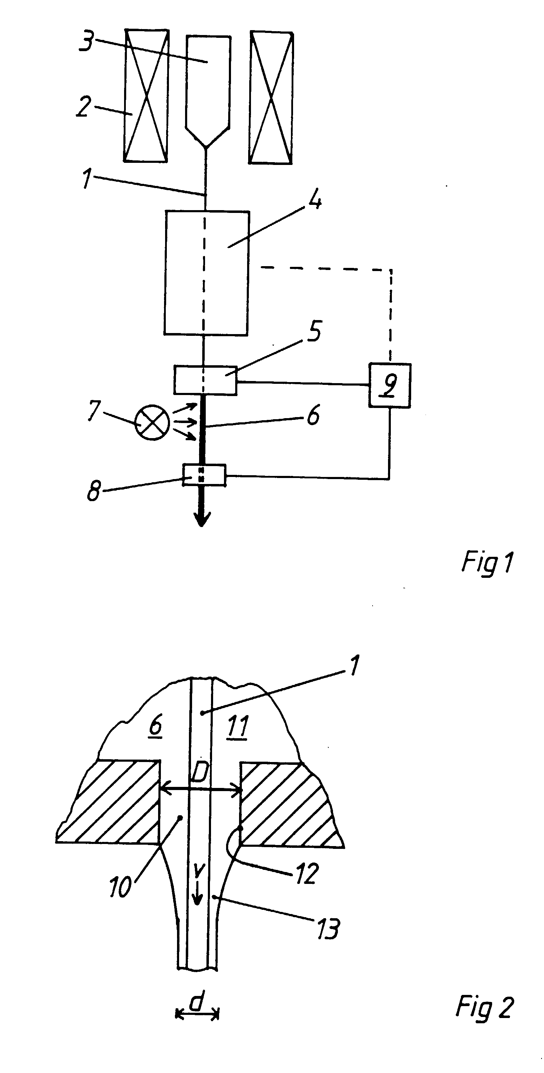

Figur 2 zeigt den Querschnitt durch einen Abschnitt der Beschichtungseinheit (5) mit der Beschichtungsdüse (10). Die Faser (1) verläuft durch das Zentrum der Beschichtungsdüse (10), wobei ihre Bewegungsgeschwindigkeit v bevorzugt etwa 1.000 m/min beträgt. Dabei tritt sie aus einem vom Beschichtungsmaterial (6) gefüllten Volumen (11) durch die Beschichtungsdüse (10) aus, deren Wandung (12) von der Oberfläche der Faser (1) beabstandet ist. Folglich bildet sich ein Film (13) des Beschichtungsmaterials (6) auf der Oberfläche der Faser (1), dessen Durchmesser d vom Durchmesser D der Beschichtungsdüse und der Form des Düsenkanals abhängt.

Weiterhin wird der Durchmesser d des Films (13) von der Viskosität des Beschichtungsmaterials (6) bestimmt, die wiederum eine Funktion seiner Temperatur ist. Bei hinreichend großem Durchmesser D der Beschichtungsdüse (10) ist auch bei niedriger Viskosität des Beschichtungsmaterials (6) sichergestellt, daß sich auf der Oberfläche der Faser (1) ein Film (13) hinreichender Dicke ausbildet. Vorteilhafte Folge einer geringen Viskosität des Beschichtungsmaterials (6) ist eine zentrische Anordnung der Faser (1) in der Beschichtung, also die Ausbildung eines Films (13), der zur Längsachse der Faser (1) symmetrisch ist. Ebenso verringert sich die Neigung zum Abreißen des Films (13) von der Faser (1), da die verringerte Viskosität Scherkräfte in der Beschichtungsdüse (10) reduziert.

## Patentansprüche

1. Verfahren zur Beschichtung einer optischen Faser (1), die in Längsrichtung aus einem Volumen (11), das mit einem flüssigen, aushärtbaren Beschichtungsmaterial (6) gefüllt ist, durch eine Beschichtungsdüse (10) austritt, wobei die Faseroberfläche von der Wandung (12) der Beschichtungsdüse (10) beabstandet ist, dadurch gekennzeichnet, daß die Viskosität des Beschichtungsmaterials (6) bei Raumtemperatur größer als 2.500 mPa·s ist und die Temperatur des Beschichtungsmaterials (6) so hoch eingestellt wird, daß seine Viskosität kleiner als 2.000 mPa·s ist.

2. Verfahren nach Anspruch1, dadurch gekennzeichnet, daß die Viskosität des Beschichtungsmaterials 1.000 bis 1.500 mPa·s, vorzugsweise 1.200 mPa·s, beträgt.

3. Verfahren nach Anspruch 1 oder 2, dadurch gekennzeichnet, daß das Beschichtungsmaterial (6) durch ultraviolette Strahlung aushärtbar ist.

4. Verfahren nach einem der vorhergehenden Ansprüche, dadurch gekennzeichet, daß die Beschichtung der Faser (1) eine Primärbeschichtung oder eine Sekundärbeschichtung oder eine Signierfarbe ist.

5. Verfahren nach einem der vorhergehenden Ansprüche, dadurch gekennzeichnet, daß das Beschichtungsmaterial (6) im Volumen (11) druckbeaufschlagt ist.

6. Verfahren nach Anspruch 5, dadurch gekennzeichnet, daß der Druck im Volumen (11) 400 bis 1.000 hPa, vorzugsweise 600 hPa beträgt.

7. Verfahren nach einem der vorhergehenden Ansprüche, dadurch gekennzeichnet, daß die Bewegungsgeschwindigkeit der Faser (1) größer oder gleich 1.000 m/min ist.

8. Verfahren nach einem der vorhergehenden Ansprüche, dadurch gekennzeichnet, daß die Temperatur des Beschichtungsmaterials (6) der Fasertemperatur entspricht.

9. Verfahren nach einem der vorhergehenden Ansprüche, dadurch gekennzeichnet, daß die Temperatur des primären Beschichtungsmaterials (6) im Volumen (11) näherungsweise die Maximaltemperatur ist, bei der das Beschichtungsmaterial (6) chemisch stabil ist.

10. Verfahren nach einem der vorhergehenden Ansprüche, dadurch gekennzeichnet, daß die Temperatur des Beschichtungsmaterials (6) und/oder der Faser (1) durch einen Regelkreis einstellbar ist, dessen Regelgröße die Dicke der Beschichtung ist.
